# EUROPÄISCHE PATENTSCHRIFT

(11) **EP 0 803 453 B1**
(45) Veröffentlichungstag und Bekanntmachung des Hinweises auf die Patenterteilung: **15.11.2000**
(21) Anmeldenummer: 97104838.4
(22) Anmeldetag: 21.03.1997
(51) Int. Cl.: B65G 13/07

(54) **Rollenbahn**
Roller conveyor
Transporteur à rouleaux

(30) Priorität: 24.04.1996 DE 29607443 U
(43) Veröffentlichungstag der Anmeldung: 29.10.1997
(73) Patentinhaber: wtt FÖRDERTECHNIK GmbH, 42929 Wermelskirchen (DE)
(72) Erfinder: Rolf, Wilhelm, 42929 Wermelskirchen (DE)
(74) Vertreter: Niemann, Uwe, Dr.-Ing.

(56) Entgegenhaltungen:
- EP-A- 0 068 886
- EP-A- 0 326 463
- DE-B- 1 756 893
- DE-U- 29 607 443
- FR-A- 2 069 967
- FR-A- 2 088 012
- US-A- 4 266 659

## Beschreibung

Die Erfindung betrifft eine Rollenbahn mit beiderseitigen Rahmenträgern, zwischen denen Rollen montiert sind, die durch Reibungsschluß mit zumindest einem gegen den Mantel der Rollen gepreßten und längs der Rollenbahn bewegten Gurt angetrieben werden, wobei zumindest einer der Rahmenträger eine unterhalb der Rollen angeordnete, sich in Längsrichtung der Rahmenträger erstreckende Tragfläche für den Gurt aufweist.

Rollenbahnen sind aus der Praxis in verschiedenen Ausführungen bekannt. Als Gurte können Flachriemen, Keilriemen oder auch Rundriemen eingesetzt werden. Damit der notwendige Reibungsschluß zwischen Gurt und Rolle erzeugt wird, werden federnde Anpreßrollen angeordnet, die den Gurt gegen die Rollen bzw. deren Mäntel pressen. Das erfordert einen erheblichen konstruktiven Aufwand. Ähnliches gilt auch bei Rollenbahnen mit Stau- und Trenneffekt, bei denen die federnden Anpreßrollen zusätzlich durch Schalteinrichtungen gesteuert werden.

Bei einer bekannten gassungsgemäßen Ausführung (EP 0 326 463 A1) sind die Rollen vertikal verschieblich gelagert. Sie werden durch ihr Eigengewicht und das auf ihnen lastende Gewicht des Fördergutes gegen den Gurt gedrückt.

Aufgabe der Erfindung ist es, eine Rollenbahn anzugeben, bei dem der konstruktive Aufwand verringert werden kann.

Diese Aufgabe wird dadurch gelöst, daß auf der Tragfläche ein Streifen aus einem dauerelastischen Material befestigt ist, der oberseitig eine verschleißfeste Gleitschicht aufweist, und daß der Gurt auf der Gleitschicht geführt ist sowie mit der bei Verformung des Streifens erzeugten Kraft gegen die Rollen gepreßt wird. Der Streifen kann insbesondere aus einem dauerelastischen Schaumstoff bestehen. Die Gleitschicht kann aus einem Kunststoff, insbesondere aus HDPE, bestehen. - Es versteht sich, daß der Abstand der Tragfläche vom Umfang der Rolle oder des Rollenmantels unter Berücksichtigung der Dicke des dauerelastischen Streifens mit der Gleitschicht und der Dicke des Gurtes so eingerichtet wird, daß die gewünschte Anpreßkraft für den Reibungsschluß zwischen Gurt und Rolle entsteht. Das gilt auch für den Staubereich einer Rollenbahn mit Stau- und Trenneffekt sowie einem Gurt, der sogenannte Mitnehmerkissen aufweist. Im übrigen ist es natürlich möglich, zumindest bereichsweise den Abstand zwischen Tragfläche und Rollenumfang so einzurichten, daß eine oder mehrere Rollen nicht angetrieben sind.

In konstruktiver Hinsicht ist eine bevorzugte Ausführung der Erfindung dadurch gekennzeichnet, daß die Tragfläche von einer am Rahmenträger befestigten Konsole gebildet ist. Zum Schutz des dauerelastischen Streifens mit der Gleitschicht und zur Führung des Gurtes kann die Konsole an ihrer freien Längsseite eine Abwinklung aufweisen, die sich in Richtung auf die Rollen erstreckt.

Im folgenden wird ein in der Zeichnung dargestelltes Ausführungsbeispiel der Erfindung erläutert: es zeigen:
- Figur 1: schematisch und teilweise den Querschnitt durch einen Rahmenträger einer Rollenbahn.
- Figur 2: einen Schnitt in Richtung II-II durch den Gegenstand nach Figur 1,
- Figur 3: eine andere Ausführung des Gegenstandes nach Figur 2.

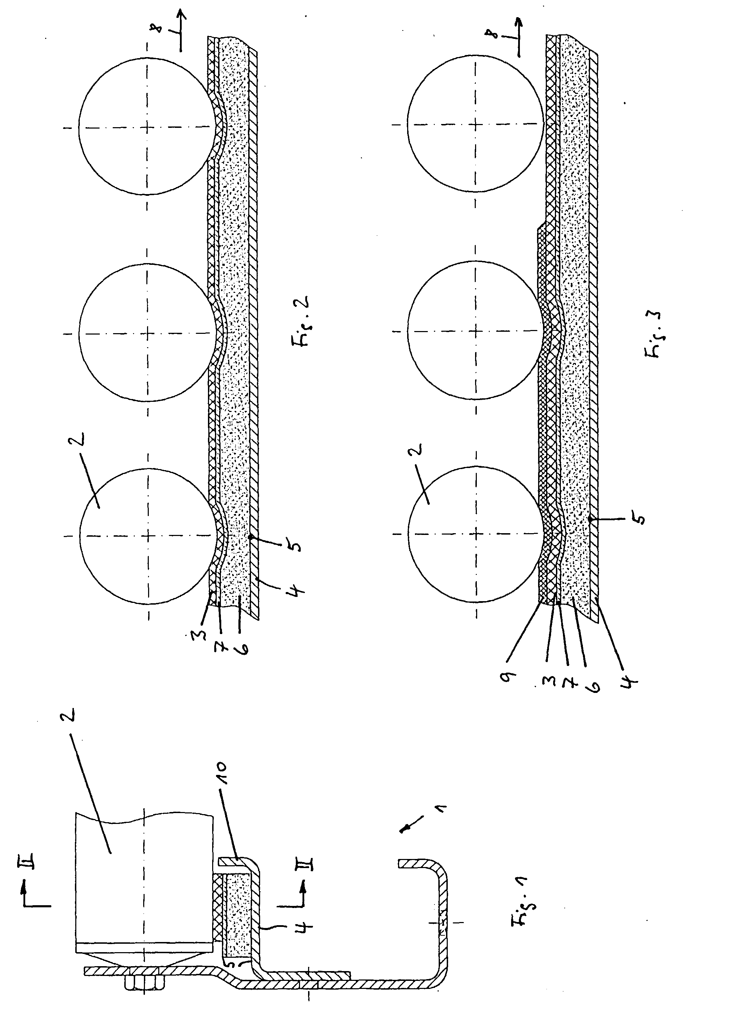

In Figur 1 erkennt man einen von zwei zueinander parallelen Rahmenträgern 1 einer im übrigen nicht dargestellten Rollenbahn. Zwischen den Rahmenträgern 1 sind in an sich bekannter Weise Rollen 2 montiert, die durch Reibungsschluß mit zumindest einem gegen den Mantel der Rollen 2 gepreßten und längs der Rollenbahn bewegten Gurt 3 angetrieben werden.

Am Rahmenträger 1 ist unterhalb der Rollen 2 eine Konsole 4 befestigt, die eine Tragfläche 5 für einen darauf befestigten Streifen 6 aus dauerelastischem Material, insbesondere aus Schaumstoff, bildet. Der Streifen 6 weist oberseitig eine verschleißfeste Gleitschicht 7 aus Kunststoff, zum Beispiel HDPE, auf. Auf der Gleitschicht 7 ist der Gurt 3 geführt.

Wie man insbesondere aus Figur 2 entnimmt, ist der Abstand der Konsole 4 mit der Tragfläche 5 von den Rollen 2 unter Berücksichtigung der Dicke des Streifens 6 mit der Gleitschicht 7 und der Dicke des Gurtes 3 so eingerichtet, daß im Bereich jeder Rolle 2 der dauerelastische Streifen 6 verformt, das heißt zusammengedrückt wird und dabei eine Anpreßkraft auf den Gurt 3 erzeugt, so daß zwischen dem längs der Rollenbahn in Pfeilrichtung 8 bewegten Gurt 3 und den Rollen 2 ein hinreichender Reibungsschluß für den Antrieb der Rollen 2 entsteht.

Bei der Ausführung nach Figur 3 bezeichnen gleiche Bezugszeichen gleiche Teile. Diese Ausführung ist insbesondere für den Staubereich einer Rollenbahn mit Stau- und Trenneffekt bestimmt. Dabei wird mit einem Gurt 3 gearbeitet. der in an sich bekannter Weise oberseitig und abschnittsweise Mitnehmerkissen 9 trägt, die die Rollen 2 in der oben beschriebenen Weise antreiben, während diejenigen Abschnitte des Gurtes 3, die keine Mitnehmerkissen 9 aufweisen, die Rollen 2 nicht berühren.

In Figur 1 ist noch dargestellt, daß die Konsole 4 an ihrer freien Längsseite eine Abwinklung 10 aufweist, die sich in Richtung auf die Rollen 2 erstreckt, so daß der Streifen 6 mit der Gleitschicht 7 geschützt angeordnet ist und gegebenfalls der Gurt 3 zusätzlich geführt wird.

## Patentansprüche

1. Rollenbahn mit beiderseitigen Rahmenträgern (1), zwischen denen Rollen (2) montiert sind, die durch Reibungsschluß mit zumindest einem gegen den Mantel der Rollen (2) gepreßten und längs der Rollenbahn bewegten Gurt (3) angetrieben werden, wobei zumindest einer der Rahmenträger (1) eine unterhalb der Rollen (2) angeordnete, sich in Längsrichtung des Rahmenträgers (1) erstreckende Tragfläche (5) für den Gurt aufweist, **dadurch gekennzeichnet ,** daß auf der Tragfläche (5) ein Streifen (6) aus einem dauerelastischen Material befestigt ist, der oberseitig eine verschleißfeste Gleitschicht (7) aufweist, und daß der Gurt (3) auf der Gleitschicht (7) geführt ist sowie mit der bei Verformung des Streifen (6) erzeugten Kraft gegen die Rollen (2) gepreßt wird.

2. Rollenbahn nach Anspruch 1, **dadurch gekennzeichnet** , daß der Streifen (6) aus einem dauerelastischen Schaumstoff besteht.

3. Rollenbahn nach Anspruch 1 oder 2, **dadurch gekennzeichnet**, daß die Gleitschicht (7) aus einem Kunststoff besteht.

4. Rollenbahn nach Anspruch 3, **dadurch gekennzeichnet**, daß die Gleitschicht (7) aus HDPE besteht.

5. Rollenbahn nach einem der Ansprüche 1 bis 4, **dadurch gekennzeich net**, daß die Tragfläche (5) von einer am Rahmenträger (1) befestigten Konsole (4) gebildet ist.

6. Rollenbahn nach Anspruch 5, **dadurch gekennzeichnet**, daß die Konsole 4 an ihrer freien Längsseite eine Abwicklung (10) aufweist, die sich in Richtung auf die Rollen (2) erstreckt.

## Claims

1. Roller path with, at both sides, frame supports (1) between which rollers (2) are mounted, which are driven by friction couple with at least one belt (3) pressed against the circumferential surfaces of the rollers (2) and moved along the roller path, wherein at least one of the frame supports (1) has a support surface (5), which is arranged under the rollers (2) and extends in longitudinal direction of the frame support (1), for the belt, characterised in that a strip (6) of permanently elastic material, which has a wear-resistant slide coating (7) on the upper side, is fastened to the support surface (5) and that the belt (3) is guided on the slide coating (7) as well as is pressed against the rollers (2) by the force produced on deformation of the strip (6).

2. Roller path according to claim 1, characterised in that the strip (6) consists of a permanently elastic foam material.

3. Roller path according to claim 1 or 2, characterised in that the slide coating (7) consists of a synthetic material.

4. Roller path according to claim 3, characterised in that the slide coating (7) consists of HDPE.

5. Roller path according to one of claims 1 to 4, characterised in that the support surface (5) is formed by a bracket (4) fastened to the frame support (1).

6. Roller path according to claim 5, characterised in that the bracket (4) has at its free longitudinal side a continuation (10) which extends in direction towards the rollers (2).

## Revendications

1. Transporteur à rouleaux muni de supports de châssis (1) situés de part et d'autre, entre lesquels sont montés des rouleaux (2) entraînés, en coopération par frottement, par au moins une courroie (3) pressée contre l'enveloppe desdits rouleaux (2) et mise en mouvement le long du transporteur à rouleaux, au moins l'un des supports de châssis (1) présentant une surface de support (5) affectée à la courroie, disposée au-dessous des rouleaux (2) et s'étendant dans la direction longitudinale du support de châssis (1), caractérisé par le fait qu'une bande (6) en un matériau à élasticité permanente fixée sur la surface de support (5) comporte, sur sa face supérieure, une couche de glissement (7) résistant à l'usure ; et par le fait que la courroie (3) est guidée sur la couche de glissement (7) et est également pressée, contre les rouleaux (2), par la force engendrée lors de la déformation de la bande (6).

2. Transporteur à rouleaux selon la revendication 1, caractérisé par le fait que la bande (6) consiste en une mousse à élasticité permanente.

3. Transporteur à rouleaux selon la revendication 1 ou 2, caractérisé par le fait que la couche de glissement (7) consiste en une matière plastique.

4. Transporteur à rouleaux selon la revendication 3, caractérisé par le fait que la couche de glissement (7) consiste en du polyéthylène à haute densité.

5. Transporteur à rouleaux selon l'une des revendications 1 à 4, caractérisé par le fait que la surface de support (5) est formée d'une console (4) fixée au support de châssis (1).

6. Transporteur à rouleaux selon la revendication 5, caractérisé par le fait que la console (4) comporte, sur sa face longitudinale libre, un coude (10) s'étendant en direction des rouleaux (2).
